(19) Europäisches Patentamt
European Patent Office
Office européen des brevets

(11) Numéro de publication: **0 027 423**
**B1**

(12) # FASCICULE DE BREVET EUROPEEN

(45) Date de publication du fascicule du brevet: **09.11.83**

(51) Int. Cl.³: **H 04 L 9/02**

(21) Numéro de dépôt: **80401460.3**

(22) Date de dépôt: **10.10.80**

(54) **Installation de chiffrement et déchiffrement d'un signal numérique.**

(30) Priorité: **10.10.79 FR 7925256**

(43) Date de publication de la demande: **22.04.81 Bulletin 81/16**

(45) Mention de la délivrance du brevet: **09.11.83 Bulletin 83/45**

(84) Etats contractants désignés: **BE DE GB IT NL SE**

(56) Documents cités:
**DE - B - 2 639 806**
**FR - A - 2 210 307**
**FR - A - 2 265 221**
**US - A - 4 133 974**

**ELECTRO CONFERENCE RECORD 1977, El Segundo US S. JEFFERY et al.: "Data Encryption" pages 30/4-1 - 30/4-6**

(73) Titulaire: **Etablissement Public Télédiffusion de France, 10, rue d'Oradour-sur-Glane, F-75015 Paris (FR)**

(72) Inventeur: **Bernede, Georges Gaston, 106, rue de Malabry, F-92350 Le Plessis Robinson (FR)**
Inventeur: **Gregeois, Jean Michel, 1, avenue Carnot, F-94230 Cachan (FR)**

(74) Mandataire: **Martinet, René et al, Cabinet Martinet 62, rue des Mathurins, F-75008 Paris (FR)**

**EP 0 027 423 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Installation de chiffrement et dechiffrement d'un signal numerique

La présente invention concerne une installation de chiffrement et déchiffrement d'un signal numérique convoyant des mots $N_i$ à n bits, i désignant le rang du mot $N_i$ dans le signal, en un signal chiffré numérique composé de mots $R_i$ à n bits, comprenant, à l'émission dans un chiffreur, des moyens logiques effectuant une opération logique g appliquée sur chaque mot $N_i$ et un mot prédéterminé $P_{i-1}$ à n bits pour produire le mot correspondant chiffre $R_i = g(N_i, P_{i-1})$ et des moyens, qui comportent, en outre, un registre d'entrée recevant les mots chiffrés $R_i$, pour produire les mots $P_{i-1}$ selon un algorithme prédéterminé à partir des mots chiffrés $R_i$, et, à la réception dans un déchiffreur, des moyens logiques effectuant une opération logique h, dite contraire de l'opération g, appliquée sur chaque mot chiffré $R_i$ et sur le mot prédéterminé $P_{i-1}$ pour produire le mot correspondant déchiffré $N_i = h(R_i, P_{i-1})$ et des moyens de production des mots $P_{i-1}$ analogues à ceux du chiffreur.

Les termes de chiffrement et de déchiffrement sont employés dans la présente description pour l'application particulière à un signal convoyant des caractères alphanumériques, bien que l'invention soit relative, de manière générale, à tout cryptage et décryptage, codage et décodage ou brouillage et débrouillage d'un signal numérique. On se réfère, dans la suite, en tant qu'exemple d'application, au signal numérique fourni par une installation de télétexte et convoyant à travers une voie de transmission d'un réseau de diffusion, par exemple d'images télévisées, des pages d'écriture destinées à être visualisées par des récepteurs de télévision classiques.

Pour une installation de télétexte, les pages d'écriture sont constituées de caractères alphanumériques portant l'information et de caractères nécessaires à la syntaxe, généralement transmis sous forme d'octets. A l'émission, le signal numérique convoyant les caractères est transmis à des moyens de multiplexage qui insèrent convenablement le signal numérique dans le signal vidéo classique, par exemple dans les signaux de suppression et de synchronisation des trames. Après avoir été véhiculé à travers la voie de télévision, le signal composite est reçu dans le terminal de l'abonné et démultiplexé afin de séparer le signal numérique du signal vidéo. Un analyseur syntaxique permet de reproduire les pages d'écriture convoyées par le signal numérique pour les visualiser par le récepteur de télévision.

Le dispositif de contrôle d'accès mis en place dans une structure de télétexte est classique. L'abonné demander possède un moyen d'accès matérialisé par un support d'information sur lequel sont mémorisées toutes les données caractérisant l'abonné et sa zone accessible. Le dispositif de contrôle acquiert ces information et les compare, d'une part, aux données d'identification éventuellement présentes à bord du terminal, d'autre part, aux données caractérisant la demande de l'utilisateur. Si cette comparaison est positive, l'installation »donne accès« aux informations.

Dans une installation de télétexte diffusé, les informations peuvent être reçues presque partout et sont donc accesibles par des moyens technologiques simples répandus dans le grand public. Des émissions sur des fréquences affectées spécialement à cet usage ne constitueraient qu'une protection illusoire. Il en est de même pour tout dispositif qui conserverait les informations sous forme directement exploitable. En outre, l'apparition et la diffusion rapide de l'informatique »domestique« met à la disposition d'un nombre croissant de personnes des puissances de calcul non négligeables. Compte tenu de tout ceci, il apparaît indispensable de chiffrer non seulement les codes de commande de l'installation de télétexte, mais le message informatif tout entier. Ceci résoud par ailleurs le problème du secret éventuellement nécessaire pour certaines utilisations institutionnelles des services de télétexte.

De manière générale, dans une installation de transmission chiffrée, on distingue:

- une source de messages N appartenant à l'ensemble des messages possibles;
- un organe de chiffrement réalisant une fonction f qui, à un message N donné, fait correspondre un cryptogramme (message chiffré résultant) R appartenant à l'ensemble des cryptogrammes possibles, selon la relation:

  $$R = f(N, C) = f_C(N)$$

  où C est un mot de code prédéterminé appelé clé de chiffrement utilisée;
- la voie de transmission à travers laquelle transitent les messages chiffrés R;
- un organe de déchiffrement réalisant la fonction inverse $f_C^{-1}$ de la fonction $f_C$ qui fait correspondre au cryptogramme R le message N initial obtenu en dépendance de la clé C selon la relation:

  $$N = f_C^{-1}(R); \text{ et}$$

- des moyens de distribution »sûrs« de la clé C.

Au regard de cette organisation, deux problèmes fondamentaux sont à résoudre, à savoir le choix d'une fonction f et le choix de la clé C et de sa distribution. La présente invention ne traite que de la résolution du premier problème.

Dans les installations de chiffrement et de déchiffrement les plus couramment utilisées, le chiffreur comporte un circuir logique ayant deux

bus d'entrée. L'un des bus reçoit les mots $N_i$ à n bits du signal numérique à chiffrer et l'autre bus reçoit des mots prédéterminés $P_i$ à n bits. L'operation logique qu'effectue le circuit logique est généralement une addition modulo 2; en d'autres termes, ce circuit contient un jeu de portes OU-Exclusif parallèles qui reçoivent chacune une paire de bits de même rang des deux mots associés $N_i$ et $P_i$. La mise en œuvre de cette opération logique OU-Exclusif à l'avantage de permettre son utilisation dans le chiffreur, en appliquant aux entrées d'un circuit logique contenu dans le déchiffreur analogue à celui du chiffreur, le mot chiffré correspondant $R_i$ et le mot prédéterminé $P_i$ pour restituer le mot déchiffré $N_i$.

Les moyens pour produire les mots prédéterminés $P_i$ sont identiques dans le chiffreur et le déchiffreur. De manière générale, ils comportent un générateur de mots binaires aléatoires ou quasi-aléatoires qui sont directement représentatifs des mots prédéterminés $P_i$ (brevet US-A-4 133 974) ou dont les bits sont sélectionnés et subissent des opérations logiques, par exemple au moyen de l'adressage d'une mémoire vive ou morte dite table de traduction qui est adressée en lecture par certains bits des mots binaires aléatoires (demandes de brevet français FR-A-2 210 307 et FR-A-2 265 221).

L'inconvénient majeur de telles installations de chiffrement et déchiffrement est qu'il est nécessaire de rendre synchrone les générateurs pseudo-aléatoires dans le chiffreur et le déchiffreur. En effet, le même mot prédéterminé $P_i$ doit être appliqué en synchronisme avec le mot à chiffrer initial $N_i$ et le mot chiffré $R_i$ correspondant aux entrées des circuits logiques du chiffreur et du déchiffreur. En d'autres termes, le déclenchement du chiffrage doit être synchronisé avec le déchenchement du déchiffrage. Afin d'assurer que les deux générateurs pseudo-aléatoires soient déclenchés au même point de départ de leur cycle de fonctionnement, il est connu de générer une séquence de bits connue appelée »donnée première«. Cette »donnée première« est utilisée pour commander le déclenchement du fonctionnement du générateur pseudo-aléatoire dans le chiffreur. La »donnée première« est alors transmise à travers la voie de transmission vers le déchiffreur afin que celui-ci la détecte pour commander le déclenchement du fonctionnement du générateur pseudo-aléatoire dans le déchiffreur.

Lorsque le déchiffrement est lié à la syntaxe du message, le mot de »donnée première« peut être inséré entre les lignes du message du texte (FR-A-2 210 307). Si le cryptage n'est pas lié à la syntaxe du message, le mot de »donnée première« est émis en premier avant le message chiffré. Dans tous lescas, les deux générateurs pseudo-aléatoires commencent au même point de départ, par identification préalable d'une même clé de message.

Corrélativement à cet inconvénient de synchronisation, la plupart des chiffreurs transmettent littéralement ce mot de »donné première« sur la voie de transmission, de sorte qu'une personne non autorisée sera capable de détecter la »donnée première« par branchement en dérivation sur la voie de transmission, d'autant plus que la »donnée première« est exigée pour être transmise sur la voie de transmission antérieurement à l'opération de déchiffrement.

Le brevet américain US-A-4 133 974 permet d'obvier en partie à cet inconvenient en chiffrant le mot de »donnée première« lui-même. En effet, selon ce brevet, le premier mot de synchronisation dit »donnée première« est transmis intégralement sur la voie de transmission, les autres mots de synchronisation suivant étant chiffrés.

On notera que d'autres installations de chiffrement et de déchiffrement fondées, non pas sur une opération logique des mots à chiffrer et des mots pseudo-aléatoires, mais sur une permutation et/ou un remplacement des mots chiffrés, nécessitent également la transmission d'un mot de synchronisation du chiffreur vers le déchiffreur. Par exemple, selon la demande de brevet allemand DE-B-2 639 806, chaque mot à chiffrer est d'abord remplacé par un autre mot obtenu en adressant en lecture une mémoire contenant une table prédéterminée. Puis le mot lu dans cette mémoire subit une permutation simple. Ainsi, le mot chiffré obtenu remplace le mot du signal initial. Là encore, il est nécessaire de synchroniser le cryptage et le décryptage par un mot de synchronisation transmis avant le message chiffré, afin que l'adressage en lecture par chaque mot initial corresponde à l'adressage en lecture par le mot chiffré correspondant du mot initial.

Ainsi, tous les procédés de chiffrement et déchiffrement précités nécessitent la transmission d'un mot de synchronisation, générallement par période constante en dépendance de la syntaxe du message. En d'autres termes, deux messages initiaux identiques correspondent à un même message chiffré, ce qui limite considérablement la préservation contre tout déchiffrage non autorisé du message chiffré.

Pour se prémunir de tous ces inconvénients, l'article de S. Jeffery et D. K. Branstad, intitulé »Data Encryption«, publie dans — Electro Conference Record —, El Segundo, USA, 1977, pages 30/4—1 à 30/4—6, divulgue une installation de chiffrement et déchiffrement du genre défini dans le préambule de la revendication 1. Les moyens de production des mots prédéterminés $P_i$ sont sous la forme d'une unite arithmétique introduite entre la sortie du registre d'entrée et une entrée du circuit logique du chiffreur, resp. du déchiffreur. Dans ces conditions, les mots $P_i$ sont prédéterminés par les mots à chiffrer, resp. chiffrés, eux-mêmes; en d'autres termes, au début du fonctionnement de l'installation, les moyens de production des mots $P_i$ se synchronisent eux-mêmes, sans nécessiter la transmission d'un mot de synchronisation particulier. En outre, cette autosynchronisation permet à deux messages identiques à chiffrer à

des instants différents de faire correspondre deux messages chiffrés différents, du fait que le contenu du registre d'entrée des mots $R_i$ est, à priori, différent à ces deux instants. Ainsi, le déchiffrage d'un message chiffré obtenu par une telle installation est pratiquement irréalisable, car la personne non autorisée doit connaître non seulement les différentes clés utilisées et l'lgorithme utilisé dans les unites arithmétiques calculant les mots $P_i$ mais également le contenu initial des registres de ceux-ci.

Selon l'article précité, chaque unité arithmétique effectue des opérations logiques simples, telles que des permutations et des additions modulo 2 entre des groupes de bits du mot contenu dans le registre d'entrée et le mot de clé sélectionné. Ces opérations logiques sont répétées un grand nombre de fois par bouclage de la sortie vers l'entrée de l'ensemble des circuits logiques. Il apparaît alors, que pour un débit numérique donné des messages entrants, la vitesse de traitement des mots mise en œuvre dans les unités arithmétiques doit être élevée, et par conséquent, contribue à un coût de l'ensemble de l'installation peu compatible avec des matériels accessibles au grand public.

La présente invention poursuit un double but. D'une part, elle vise à un traitement très rapide des mots à chiffrer ou à déchiffrer en faisant appel à des circuits logiques fonctionnant au même débit numérique que les messages entrants. Comme on le verra dans la suite, au lieu que chaque mot prédéterminé soit calculé selon un algorithme déterminé pour chaque mot de message, au fur et à mesure de la transmission des mots du message, les mots prédéterminés selon l'invention sont calculés préalablement avant le chiffrage du message selon un algorithme prédéterminé par la clé, puis sont mémorisés dans une mémoire qui est lue à la même vitesse que le débit des mots à chiffrer, resp. chiffré. D'autre part, l'invention vise également à augmenter le degré de sécurité du chiffrement en incluant un nouveau critère fondé sur une sélection des bits sortant du registre d'entrée.

A cette fin, l'installation de chiffrement et de déchiffrement est telle que caractérisée dans la revendication 1.

Les fonctions g, dite de chiffrement, et h, dite de déchiffrement, font correspondre à chaque mot $R_i$ d'un message à chiffrer un mot $N_i$ du message chiffré, tous deux à n bits. Cette bijection est définie pour une table de mots mémorisés $P_i$, Cette table est déterminée par un algorithme convenable ou logiciel du calculateur. Le calculateur reçoit pour un message donné un mot de code correspondant ou clé. Il calcule, selon l'algorithme en fonction de la clé donnée, les mots $P_i$ et les écrit à des adresses respectives de la mémoire programmable contenant $2^a$ cellules à n étages chacune. En phase de calcul, préalablement au chiffrement, resp. au déchiffrement, le calculateur du chiffreur, resp. du déchiffreur, commande la déconnexion des moyens d'adressage et de la mémoire programmable.

Selon une variante générale, les nombres n et a sont différents. Le registre d'entrée est un registre à décalage recevant en série les mots $R_i$. Le contenu d'une adresse $A_i$ dépend alors, non seulement des bits du mot précédemment chiffré $R_i$, mais également des bits des mots chiffrés antérieurement $R_{i-1}$, $R_{i-2}$, ... Les moyens d'adressage sont commandés par le calculateur pour sélectionner a sorties du registre r, en fonction de la clé donnée. Ceci contribue encore à augmenter le secret du chiffrement.

En outre, le fait que l'adressage $A_i$ dépend des mots chiffrés précédents, confère à l'installation, comme on le verra dans la suite, une propriété d'autosynchronisation. En d'autres termes, aucun mot supplémentaire n'est nécessaire pour synchroniser le chiffreur et le déchiffreur, car lorsqu'un mot chiffré est reçu erroné dans le déchiffreur, seulement un nombre J relativement faible de mots chiffrés suivant seront erronés, le $J+1^{ème}$ mot chiffré étant assurément convenable. Ce nombre J dépend du rapport r/n.

Un chiffreur élémentaire et un déchiffreur élémentaire tels que définis ci-dessus possèdent avantageusement la propriété d'être itérables à volonté, sans dégradation notable des propriétés inhérentes à l'installation. A cet égard, pour une installation comportant K couples de chiffreur et déchiffreur élémentaires, dont les fonctions logiques g et h sont dites contraires selon les relations précédentes, les chiffreurs élémentaires sont reliés en série selon leur indices croissants, de l'entrée vers la sortie du chiffreur global et les déchiffreurs élémentaires sont reliés en série selon leurs indices décroissant de l'entrée vers la sortie du déchiffreur global. Une telle structure à au moins deux couples de chiffreur et déchiffreur élémentaires accroît considérablement la protection du secret, randant quasi-impossible le déchiffrage par tout tiers ne connaissant pas les deux tables de mots P affectées aux deux couples.

Enfin, un autre avantage du chiffreur (resp. du déchiffreur) conforme à l'invention est que son entrée recevant le signal numérique à chiffrer et sa sortie délivrant le signal numérique chiffré sont de même nature. Ceci permet d'insérer le chiffreur, resp. le déchiffreur, dans une chaîne de circuits déjà existants.

D'autres avantages de la présente invention apparaîtront plus clairement à la lecture de la description qui suit de plusieurs exemples de réalisation de l'installation et à l'examen des dessins annexés correspondants, dans lesquels:

- la Fig. 1 représente schématiquement le bloc-diagramme d'un chiffreur élémentaire conforme à l'invention;
- la Fig. 2 représente schématiquement le bloc-diagramme d'un déchiffreur conforme à l'invention; et
- les Figs. 3A et 3B représentent schématique-

ment une installation ayant une pluralité de couples de chiffreur et déchiffreur élémentaires analogues à ceux des Figs. 1 et 2.

La Fig. 1 représente schématiquement un chiffreur 1 conforme à l'invention. On notera dès maintenant que les liaisons entre les différents blocs de la Fig. 1 et également des Figs. 2, 3A et 3B sont des bus de fils parallèles, sauf indication contraire. Chaque bus est répéré conjointement aux types de mots à bits parallèles qu'il convoie.

L'entrée $E_1$ du chiffreur 1 reçoit un signal numérique sous forme de mots binaires M(m) à m bits parallèles. Eventuellement, un convertisseur parallèle-parallèle 10 peut être pour convertir le signal à mots M(m) en un signal numérique à mots N(n) ayant n bits parallèles, où n est different de m. Les mots N(n) sont transmis à n premières entrées parallèles 110 d'un circuit logique 11 qui effectue une opèration logique g. Cette opération porte sur deux mots $N_i(n)$ et $P_{i-1}(n)$, chacun ayant n bits parallèles. Le mot $P_{i-1}(n)$ est sélectionné en fonction de mots N(n) ayant un rang inférieur à $i-1$ et transmis précédemment au mot $N_i(n)$. Le mot $P_{i-1}(n)$ est délivré par une mémoire programmable 12 vers n secondes entrées parallèles 111 du circuit 11, comme on le verra dans la suite. Le bus de sortie 112 du circuit 11 transmet des mots résultant $R_i(n)$ à n bits parallèles, tels que:

$$R_i = g(N_i, P_{i-1})$$

L'opération g est une fonction combinatoire possédant les propriétes souhaitées au point de vue statistique.

Le mot $R_i$ est fourni, à travers un bus à n fils 130, à un circuit d'adressage 13 et, à travers un bus à n fils 140, à un circuit de sortie 14. Le circuit de sortie 14 est composé d'un registre tampon précédant la sortie $S_1$ du chiffreur. Il comporte dans la cas où le convertisseur 10 est utilisé, un convertisseur parallèle-parallèle convertissant la suite des mots R(n) en une suite de mots R(m). Autrement, le circuit de sortie n'est pas indispensable.

Le circuit d'adressage 13 comprend un registre 131 à r étages. Le bus de sortie 132 du circuit d'adressage 13 transmet un mot d'adresse de lecture A(a) à a bits ($a \leq r$), chaque fois qu'un mot entrant R(n) est reçu sur le bus 130. Le bus de sortie 132 est relié à l'entrée d'adressage 120 de la mémoire 12 qui contient $2^a$ mots P(n) à n bits. Ainsi, à chaque mot d'adressage A(a) reçu à l'entrée 120, la mémoire 12 délivre par son bus de sortie 121 un mot P(n) vers l'entrée 111 du circuit 11.

De manière générale, les nombres n, r et a sont différents. Dans ce cas, le circuit d'adressage 13 comprend, par exemple, un convertisseur parallèle-série 133 qui convertit chaque mot parallèle R(n) transmis par le bus 130 en un mot série qui est mémorisé, à travers le fil d'entrée 134 du registre, dans les premiers étages du registre à décalage 131 à r étages. Le contenu 131 évolue n bits par n bits en fonction des mots R(n) entrants. Si on a $r < n$, seuls r bits de poids prédéterminés du mot R(n) sont enregistrés et serviront à composer le mot d'adressage A(a). Par contre, si on a $r > n$, tous les bits du mot R(n) sont enregistrés dans le registre 131. Ceux-ci serviront, conjointement avec les $(r-n)$ bits précédemment enregistrés et provenant des mots précédents R(n) et, éventuellement, du contenu initial du registre 131, à composer les mots d'adresse A(a). Selon une troisième variante, si on a $n = r$ ou $n > r$, le convertisseur 133 n'est pas nécessaire et le registre 131 est un simple registre tampon recevant en parallèle les n bits ou r bits de chacun des mots R(n).

Egalement dans le cas général, r est différent de a, mais, bien entendu, supérieur à a. Un circuit 135 sélectionne a sorties du registre à décalage 131 parmi r. Ce circuit 135 est composé classiquement de portes ET parallèles, et transmet sur le bus 132 un mot A(a) chaque fois qu'un mot R(n) est émis par le bus de sortie 112 du circuit logique 11. Cependant, selon la variante où $r = a$, le circuit de sélection de sortie 135 est supprimé, et les r sorties du registre 131 sont reliées directement aux entrées d'adressage 120 de la mémoire 12.

Ainsi, il apparaît que, pour un mot entrant $N_i(n)$ dans le circuit logique 11, le circuit d'adressage 13 transmet un mot $A_{i-1}(a)$, qui est déduit du contenu du registre 131 et qui est constitué par certains bits des mots résultants précédents $R_{i-1}(n)$, $R_{i-2}(n)$, ... Un mot $P_{i-1}(n)$ est lu dans la cellule de la mémoire 12 à l'adresse $A_{i-1}(a)$ et est combiné au mot $N_i(n)$ dans le circuit 11 pour donner le mot résultant $R_i = g(N_i, P_{i-1})$. Au rythme des mots N(n), resp. M(m), des mots sortants R(n), resp. R(m), sont transmis à la sortie $S_1$ du chiffreur.

Préalablement à la phase de traitement du message entrant M(m) ou N(n) dans le chiffreur 1, on procède à l'écriture de la table de chiffrement dans la mémoire 12, qui est une mémoire programmable. On rapelle que cette table est constituée de $2^a$ mots P(n) de n bits, certains pouvant être égaux. L'établissement de cette table est effectué par un calculateur 15 composé essentiellement par un micro-processeur associé à un logical. L'utilisation de la table ne fait ensuite appel qu'à de la circuiterie et est donc rapide et simplement limitée par la technologie des circuits utilisés. Le logiciel représente un algorithme établi une fois pour toutes. En fonction d'un mot de code ou clé C reçu à l'entrée 150 du calculateur, l'algorithme permet de calculer des mots (P(n) qui sont transmis sur un bus de sortie 151 du calculateur et qui sont écrits respectivement dans des cellules de la mémoire 12 préalablement adressées par le calculateur 15 sous forme de mots A(a), à travers un bus de sortie 152 relié à l'entrée d'adressage 120 de la mémoire. En outre, dès que le calculateur 15 reçoit sur son entrée 150 une clé C, celui-ci émet sur un fil de sortie 153 un signal d'ordre vers le circuit

d'adressage 13, en particulier vers le registre 131, et vers la mémoire 12. Le circuit d'adressage 13 est alors déconnecté de la mémoire 12, c'est-à-dire présente une résistance élevée sur le bus 132, et la mémoire programmable 12 est en phase d'écriture ou d'écriture-lecture si le calculateur 15 est conçu pour vérifier si un mot P(n) a bien été écrit à la cellule correspondant à l'adresse fournie. Dès que le calculateur 15 a terminé la phase de calcul et de mémorisation des $2^a$ mots P(n), la boucle des circuits 12, 11 et 13 est de nouveau fermée et le chiffreur traite le signal numérique entrant N(n) resp. M(m).

Le circuit de sélection 135 sélectionnant les r sorties du registre 131 est de préférence prévu programmable. Dans ce cas, pour une clé C donné, le calculateur 15 adresse, à travers un bus 154, pendant la phase initiale de calcul et de mémorisation, a mots d'adresses sélectionnant a sorties parmi r.

La transmission de la clé C à l'entrée 150 du calculateur est commandée par un dispositif de lecture de clé 16 dépendant du support d'enregistrement de la clé. En général, pour le chiffreur 1 qui est inclus dans les moyens d'émission du signal à chiffrer destiné à être transmis vers différents usagers, le dispositif de lecture 16 comporte un clavier ou des roues codeuses au moyen duquel un mot alphanumérique représentant la clé convenablement codée, par exemple, en code décimal codé binaire, est attricué à chaque signal numérique, qu'il convient de chiffrer, pour rendre sélective sa détection chez les usagers. En outre, deux voyants à diodes électroluminescentes peuvent être prévus afin de signaler au programmeur que le calculateur 15 est en phase de calcul de la table des mots P(n) ou a terminé celle-ci, auquel cas le programmeur déclenchera la transmission du mesage.

La Fig. 2 représente schematiquement le blocdiagramme du déchiffreur 2 associé à celui du chiffreur 1 de la Fig. 1. Le déchiffreur 2 est localisé dans les moyens de réception de chaque usager.

Il comporte, comme le chiffreur 1 et identiquement quant à leurs structures, respectivement par rapport aux circuits 10, 12, 13, 14 et 15, un convertisseur parallèle-parallèle 20, une mémoire programmable 22, un circuit d'adressage 23, un circuit de sortie 24 et un calculateur 25. Les différentes variantes déterminées par les rapports entre les nombres n, r et a correspondent respectivement à des structures des circuits 20, 22, 23, 24 et 25 identiques à celles décrites précédemment pour les circuits 10, 12, 13, 14 et 15 du chiffreur. On notera, à cet égard, que les circuits et liaisons équivalents dans le chiffreur 1 et le déchiffreur 2 sont repérés par un même nombre à deux chiffres précédé par un 1 pour le chiffreur et par un 2 pour le déchiffreur. On considérera ci-après le cas général pour lequel les entiers n, r et a sont différents.

L'entrée $E_2$ du déchiffreur 2 reçoit un message numérique à déchiffrer qui est composé de mots R(m) à m bits parallèles, tels que ceux transmis par la sortie $S_1$ du chiffreur 1. Le convertisseur parallèle-parallèle 20 convertit les mots R(m) en des mots R(n) à n bits parallèles transmis de son bus de sortie 200 vers les bus d'entrée 210, 230 d'un circuit logique 21 et du circuit d'adressage 23. Comme dans le chiffreur 1, le circuit d'adressage 23 du déchiffreur transmet un mot d'adresse A(a) sur son bus de sortie 232 vers l'entrée d'adressage 220 de la mémoire 22, chaque fois qu'il reçoit un mot R(n). Le registre 231 du circuit d'adressage 23 comporte également r étages. Lorsque sont prévus des circuits de sélection figés 135 et 235, ces derniers sélectionnent toujours des sorties de mêmes rangs prédéterminés des registres 131 et 231, respectivement. Si les circuits d'adressage 135 et 235 sont programmables par les calculateurs respectifs 15 et 25 à travers les bus 154 et 254, ils sélectionnent des sorties des registres 131 et 231 dont les rangs sont programmés en fonction d'une même clé C reçue aux entrées 150 et 250 des calculateurs 15 et 25. Pour une même clé C, le calculateur 25, soumis à un logiciel identique à celui du calculateur 15, fournit, à travers le bus 251, des mots Q(n) à la mémoire 22, qui sont respectivement identiques aux mots P(n) et qui correspondent à des adresses A(a) transmises à travers le bus 252 vers l'entrée d'adressage 220 de la mémoire 22. Ainsi, la phase de calcul du calculateur 25 est identique à celle du calculateur 15 et, après cette phase, la table contenue dans la mémoire 22 est identique à celle contenue dans la mémoire 12, pour une même clé, c'est-à-dire que chaque couple (A, Q) est identique à un couple (A, P).

Le dispositif de lecture de clé 26 du déchiffreur 2 transmet la clé C à l'entrée 250 du calculateur 25 et peut être différent de celui 16 du chiffreur 1. En particulier, le dispositif 26 peut être constitué par un appareil du genre à tête magnétique qui lit la clé C enregistrée sur une carte permettant à l'organisme de diffusion des programmes ou messages transmis sous la forme de signaux numériaues chiffrés R(m) de contrôler la télédistribution chez les usagers.

Le circuit logique 21 reçoit en synchronisme à ses entrées 210, 211 deux mots R(n) et Q(n) à n bits chacun. Il réalise une fonction logique h dite »contraire« — ainsi appelée parce qu'elle ne peut être définie comme fonction réciproque ou inverse au sens mathématique propre — telle que le mot résultant R' à n bits transmis à la sortie 212 du circuit 21 est donné par la relation suivante:

$$R_i' = N_i = h(R_i, Q_{i-1}) \text{ lorsque}$$
$$R_i = g(N_i, P_{i-1}) \text{ avec}$$
$$Q_{i-1} = P_{i-1}.$$

Ces relations sont vérifiées lorsque la synchronisation est établie entre le chiffreur 1 et le déchiffreur 2, c'est-à-dire lorsque le contenu du registre 231 devient identique à celui du registre 131. Lorsque le registre 231 a enregistré dans ses

premiers étages tout $(r>n)$ ou partie $(r<n)$ d'un mot $R_i(n)$ de rang i, le circuit d'adresse 23 sélectionne l'adresse $A_i(a)$ afin que le mot $Q_i(n)$ tel que $Q_i(n)=P_i(n)$ soit lu dans la mémoire 22. Le circuit logique 21 reçoit alors simultanément sur ses entrées 210 et 211 les mots $R_{i+1}(n)$ et $Q_i(n)$ et produit à sa sortie le mot

$$R'_{i+1}=h(R_{i+1}, Q_i)=h(R_{i+1}, P_i)\,.$$

Or, d'après la propriété précédemment énoncée de la fonction h »contraire« de g et la relation $R_{i+1}=g(N_{i+1}, P_i)$, on obtient:

$$R'_{i+1}(n)=N_{i+1}(n)$$

Il reste cependant à montrer que la synchronisation est atteinte et à calculer le délai nécessaire, c'est-à-dire le nombre de mots requis devant être reçus par le déchiffreur 2 pour obtenir la synchronisation. Il apparaît, à cet égard, que cette propriété peut être qualifiée d'autosynchronisation et qu'il n'est exigé aucun signal supplémentaire précédant le message à chiffrer à l'émission dans le chiffreur 1 et devant être déchiffré à la réception dans le chiffreur 2.

A l'initialisation, c'est-à-dire lors de la phase de calcul et de mémorisation commandée par le calculateur 15 du chiffreur 1, resp. le calculateur 25 du déchiffreur 2, les contenus des registres 131 et 231 sont $B_0(r)$ et $D_0(r)$, quelconques et a priori différents.

Le premier mot $N_1(n)$ est appliqué à l'entrée 110 du circuit logique 11 du chiffreur qui transmet le mot résultant

$$R_1(n)=g(N_1, P[B_0])$$

sur le bus 112 pour son chargement dans le registre 131 et, à travers éventuellement le circuit 14, le mot correspondant $R_1(m)$. Le mot $P[B_0]$ correspond à celui lu dans la mémoire 12 à l'adresse correspondant au contenu $B_0$ du registre 131 après sélection par le circuit 135. Après que le mot $R_1(m)$ et éventuellement, en partie ses suivants $R_2(m)$, $R_3(m)$ . . ., si $m\neq n$, soit convoyé par la voie de transmission convenable entre le chiffreur 1 et le déchiffreur 2, l'entrée 210 du circuit 21 du déchiffreur reçoit le mot $R_1(n)$. Le circuit 21 calcule $R_1'(n)=h(R_1, Q[D_0])$ où $Q[D_0]$ correspond au mot lu dans la mémoire 22 à l'adresse correspondant au contenu $D_0$ du registre 231 après sélection par le circuit 235. On a, bien entendu, $R_1'(n)\neq N_1(n)$, car le déchiffrement n'a pas été réalisé avec le contenu $(D_0\neq B_0)$ du registre d'adresse 131. Par ailleurs, $R_1(n)$ a été mémorisé (tout ou partie) dans les registres 131 et 231 dont les contenus sont devenus $B_1(r)$ et $D_1(r)$. Dans ce cas, on constate que les contenus $B_1$ et $D_1$ ont au plus n bits identiques appartenant au mot $R_1(n)$. Si $r\leq n$, la suite des mots $N_2(n)$, $N_3(n)$ . . . reçus par le chiffreur 1 et la suite des mots $R_2'(n)$, $R_3'(n)$ . . . calculés dans le déchiffreur 2 deviennent alors égales. Par contre, si $r>n$, les contenus des registres 131 et 231 ne sont pas identiques, tant qu'il reste dans les étages de poids faible des registres 131 et 231 des bits de poids fort appartenant respectivement aux mots $B_0(r)$ et $D_0(r)$. Le déchiffrement devient correct quand les contenus de ces registres sont identiques, c'est-à-dire lorsque tous les bits des mots $B_0$ et $D_0$ ont été chassés et remplacés par des bits de mots R(n). Ceci nécessite l'envoi de J mots sur la voie de transmission, où l'entier J est défini par:

$$J=\mathrm{ENT}\,[r/n] \text{ si } r=0 \text{ modulo } (n)$$

ou

$$J=\mathrm{ENT}\,[r/n]+1 \text{ si } r\neq 0 \text{ modulo } (n)$$

où ENT désigne la fonction partie entière.

Le mot $R_{J+1}(n)$ de rang $J+1$ est ensuite déchiffré correctement. J sera nommé délai d'autosynchronisation.

Par ailleurs, on remarquera que, pour une même clé C et un même message M(m), resp. N(n), à chiffrer, deux chiffrement de ce message produisent a priori deux messages chiffrés R(m), resp. R(n), qui sont différents, puisque, à deux instants donnés, les contenus initiaux $B_0(r)$ du registre 131 sont a priori différents. Cette propriété accroît avantageusement le secret de l'information à transmettre.

L'autosynchronisation a une conséquence importante sur la propagation des erreurs dues à la voie de transmission entre le chiffreur et le déchiffreur. On suppose qu'un mot $R_i(n)$ chiffré par le chiffreur donne, après convoyage à travers la voie de transmission, un mot $R_i^*(n)$ sur le bus 200 du déchiffreur. Dans ces conditions, le mot $N_i^*(n)$ résultant du déchiffrement du mot $R_i^*(n)$ est erroné $(N_i^*(n)\neq N_i(n))$. Par ailleurs, le déchiffrement des J mots suivants non erronés $R_{i+1}(n)$ à $R_{i+J}(n)$ sera faux puisque, d'après l'autosynchronisation, J mots sont nécessaires pour que les contenus des registres 131 et 231 redeviennent identiques. Si l'on généralise le cas particulier précédent, au cas où des erreurs sont transmises dans un paquet composé de I mots erronés $R_i^*(n)$ à $R^*_{i+I}(n)$, alors à la réception dans le déchiffreur 2, il faudra déchiffrer $I+J$ mots $R_i^*(n)$ à $R^*_{i+I+J}(n)$ pour que le déchiffrement redevienne correct. Dans tous les cas, la propagation d'erreurs est limitée à J mots.

En se reportant aux Figs. 3A et 3B, on a représenté schématiquement les structures d'un chiffreur et d'un déchiffreur déduites de celles 1, 2 des Figs. 1, 2 par réitération. Ils comportent respectivement K chiffreurs élémentaires $1_1$ à $1_K$ selon la Fig. 1 et K déchiffreurs élémentaires $2_1$ à $2_K$ selon la Fig. 2.

A la Fig. 3A, on retrouve dans chaque chiffreur élémentaire $1_k (1\leq k\leq K)$ une boucle constituée par un circuit $11_k$ qui effectue l'opération logique $g_k$, un circuit d'adressage $13_k$ qui comprend un registred $r_k$ étages et transmet des mots d'adresse $A(a_k)$ où $a_k\leq r_k$, et une mémoire $12_k$ qui possède $2^ak$ cellules enregistrant chacune un mot $P_k$ à n bits. Le bus d'entrée $110_1$ du premier chiffreur élémentaire $1_1$ est relié

à l'entrée $E_1$ du chiffreur global, éventuellement à travers le convertisseur parallèle-parallèle 10 qui reçoit le message à chiffrer M(m). Le dernier chiffreur élémentaire $1_K$ a son bus de sortie $140_K$ qui est relié au circuit de sortie 14 qui transmet par la sortie $S_1$ du chiffreur global le message chiffré R(m) vers la voie de transmission. Le bus d'entrée $110_2$, ... $110_K$ du circuit logique $11_2$, ... $11_K$ d'un chiffreur élémentaire $1_2$ à $1_K$ est reliée au bus de sortie $140_1$ ... $140_{K-1}$ du chiffreur élémentaire précédent $1_1$ ... $1_{K-1}$ respectivement.

Chaque chiffreur élémentaire, tel que $1_1$ ou $1_K$, par exemple, peut inclure un calculateur, tel que $15_1$ ou $15_K$, associé à une mémoire programmable, telle que $12_1$ ou $12_K$. Le calculateur reçoit par son entrée, telle que $150_1$ ou $150_K$, un mot codé ou clé élémentaire, telle que $C_1$ ou $C_K$, qui lui est propre pour un message à chiffrer donné, au moyen d'un dispositif de lecture commun 17, du genre de celui déjà décrit 16. Le support d'enregistrement du dispositif de lecture 17 (resp. 27 du déchiffreur) contient une clé C composé par la suite des clés élémentaires et des adresses des calculateurs des chiffreurs élémentaires (resp. des déchiffreurs élémentaires). Cependant, certains chiffreurs élémentaires, tels que $1_2$, ne comportent pas de calculateur. La mémoire, telle que $12_2$, de ces chiffreurs est alors une mémoire morte contenant à chaque adresse $A_i(a_k)$ le mot correspondant $P_{i,k}(n)$. Le circuit de sélection d'adresses de celle-ci, tel que $135_2$, s'il existe, n'est pas programmable.

Les déchiffreurs élémentaires $2_K$ à $2_1$ du déchiffreur de la Fig. 3B comprennent chacun également une boucle fermée analogue à celle 2 de la Fig. 2. Pour un déchiffreur élémentaire $2_k (1 \leq k \leq K)$, on y retrouve un circuit d'adressage $23_k$ et une mémoire $22_k$ identiques à ceux $13_k$ et $12_k$ du chiffreur élémentaire $1_k$. Si les mémoires $12_k$ et $22_k$ sont programmables, le déchiffreur $2_k$ comprend également un calculateur $25_k$ dont le logiciel et le microprocesseur sont identiques à ceux du calculateur $15_k$ et qui est commandé par un dispositif de lecture commun 27, du genre de celui 26 montré à la Fig. 2. Comme déjà dit, une clé commune est composée de clés élémentaires $C_k$ qui sont adressées par le dispositif 27 respectivement aux entrées $250_k$ des calculateurs $25_k$ des déchiffreurs élémentaires correspondants $2_k$.

Afin d'assurer convenablement le déchiffrement, par correspondance deux à deux d'un chiffreur élémentaire $1_k$ et d'un déchiffreur élémentaire $2_k$, les déchiffreurs élémentaires sont reliés successivement, suivant leur indice décroissant K à 1, à partir de l'entrée $E_2$ du déchiffreur global. Le bus d'entrée $200_K$ du déchiffreur $2_K$ est relié à l'entrée $E_2$, éventuellement à travers le convertisseur parallèle-parallèle 20 si le chiffreur global effectue une conversion de mots M(m) en mots N(n). Le bus de sortie $212_1$ du circuit logique $21_1$ du déchiffreur élémentaire $2_1$ est relié à travers le circuit de sortie 24 à la sortie $S_2$. Le bus de sortie $212_K$, ... $212_2$ du circuit logique $21_K$, ... $21_2$ de chaque déchiffreur élémentaire $2_K$, ... $2_2$ est relié au bus d'entrée $200_{K-1}$, ... $200_1$ du déchiffreur élémentaire suivant $2_{K-1}$, ... $2_1$, respectivement.

Chaque déchiffreur élémentaire $1_k$ réalise, en outre, au moyen de son circuit logique $21_k$, la fonction »contraire« $h_k$ de celle $g_k$ du circuit logique $11_k$ du chiffreur correspondant $1_k$. Le secret obtenu par un tel couple de chiffreur et déchiffreur globaux est considérablement accru au prix d'une plus grande complexité de la circuiterie.

Par ailleurs, si on désigne $J_k$ le délai d'autosynchronisation d'un déchiffreur élémentaire $2_k$, le délai d'autosynchronisation J du déchiffreur global composé de K déchiffreurs élémentaires $2_1$ à $2_K$ est donné par la somme suivante:

$$J = \sum_{k=1}^{K} j_k$$

dans laquelle

$$j_k = \text{ENT}\,[r_k/n] \text{ si } r_k = 0 \text{ modulo } (n)$$

ou

$$j_k = \text{ENT}\,[r_k/n] + 1 \text{ si } r_k \neq 0 \text{ modulo } (n)$$

A titre d'exemple non limitatif, deux applications du chiffrement et du déchiffrement conformes à l'invention sont décrites ci-après.

La première application concerne un message transmis selon les prescriptions de l'installation de télétexte française dite ANTIOPE (Acquisition Numérique et Télévisualisation d'Images Organisées en Pages d'Ecritures). Dans cette installation, le message est composé de pages destinées à être visualisées par les récepteurs de télévision classiques chez les usagers. Chaque page est organisées en rangées de caractères. Le contenu d'une page est ainsi constitué de caractères nécessaires à la mise en page et constituant la syntaxe, c'est-à-dire la position du début de page, de ligne, le numéro de ligne, etc... Chacun de ces caractères alphanumériques est transmis sous la forme d'un mot à 8 bits N(8) ou octets. L'ensemble de ces caractères constituant le message est directement transmis à l'entrée 110 du circuit logique 11 du chiffreur. Tous les mots N, R, A et P sont des octets et les chiffreur et déchiffreur ont une structure suivant la variante simple où $m = n = r = a = 8$. Les convertisseurs 10 et 20 sont supprimés et les circuits d'adressage 13, 23 ne comporte chacun qu'un simple registre tampon 131, 231 à 8 étages. Le bus 140 sortant du chiffreur est relié à un multiplexeur vidéo qui est destiné à insérer le signal numérique chiffré R(8) dans certaines lignes appartenant au signal de suppression et de synchronisation de trames d'un signal de télévision en couleurs classique, ce signal conservant son contenu propre. Selon une autre variante, le signal numérique chiffré

R(8) peut occuper la totalité de la voie télévision (utilisation »plein canal«). Le chiffreur est interconnecté entre la source de message ANTIOPE et le multiplexeur, en prenant les précautions d'usage d'adaptation électrique.

A la réception dans le local de l'usager, un terminal comporte un démultiplexeur vidéo afin de séparer le signal de télévision classique transmis vers le récepteur de télévision et le signal numérique chiffré R(8). Ce dernier est reçu par l'entrée 200 du déchiffreur qui délivre le signal N(8) déchiffré à un analyseur de syntaxe ANTIOPE. L'analyseur syntaxique fournit des ordres à un dispositif de visualisation qui élabore les pages du message ANTIOPE présentées ensuite sur le tube cathodique du récepteur.

Dans le cas où l'usager n'a pas introduit dans le dispositif de lecture 26 la clé correspondant au chiffrement du message transmis, c'est-à-dire du magazine qu'il désire visualiser, les images transmises après déchiffrement sont complètement illisibles. Eu égard au chiffrement complexe mis en œuvre selon l'invention, l'usager, quand bien même il serait un homme du métier, est incapable de déchiffrer les pages visualisées. En effet, il doit connaître la table des mots P=Q dans les mémoires 12 et 22, mais également connaître l'état initial $B_0(8)$ du registre 131 avant le chiffrement, lequel diffère a priori pour chaque transmission de message. Si l'usager détermine la table des mémoires 12 et 22 pour un message, il ne pourra pas néanmoins la réutiliser pour un autre message, puisque, à chaque clé identifiant un message, correspond une table P=Q déterminée par l'algorithme inhérant aux calculateurs 15 et 25.

Selon une réalisation préférée, les opération logiques g et h sont le »OU« exclusif de l'algèbre de Boole portant sur chacune des 8 paires de bits de même poids des mots N(8) et P(8) dans le chiffreur et des mots R(8) et Q(8) dans le déchiffreur. Chaque circuit logique 11, 21 comprend ainsi 8 portes logiques OU exclusif, chacune d'elles ayant une entrée reliée à un fil du bus 110, 210 et une entrée reliée à un fil du bus 111, 211. Il apparaît que les relations définissant la fonction h dite »contraire« de g

$$N = h(R, Q = P) \text{ lorsque } R = g(N, P)$$

sont applicables aux fonctions OU exclusif g = h, désignées ci-après par le signe   :

$$N = R \quad P \qquad \text{lorsque } R = N \quad P$$

Une seconde application est relative à toute installation de télévision cryptée basée sur des transformations des tensions électriques représentatives d'une partie d'image télévision (ligne, point, etc.), commandées par un message binaire caractéristique de l'émission reçue.

Une telle installation est par exemple l'installation de télévision cryptée française dite DISCRET (DISpositif de CRyptage pour Emission de Télévision) qui est destiné à la transmission d'émissions strictement assignées à un groupe de téléspectateurs particuliers. Le procédé mis en œuvre par cette installation est fondé sur l'inversion et le décalage, par lignes de retard, des lignes du signal vidéo, ces opérations étant commandées par un générateur pseudo-aléatoire classique à bascules bistables et rebouclages par portes logiques du genre OU exclusif. Deux mots informatifs numériques sont nécessaires pour le fonctionnement du générateur pseudo-aléatoire. Un premier mot dit de configuration indique les rebouclages effectués et, par suite, identifie la séquence générée. Un second mot dit de synchronisation est chargé dans les bascules à des instants prédéterminés et indique le début de la séquence.

Dans l'installation DISCRET, le mot de synchronisation est modifié périodiquement en transportant son contenu binaire à l'aide d'une procédure selon l'installation française DIDON (DIffusion de DONnées) identique à celle du transport selon l'installation ANTIOPE. Conformément à l'invention, le chiffrement et le déchiffrement par un chiffreur et un déchiffreur selon les Figs. 1 et 2 s'applique, en tant que mots M(m) ou N(n), aux mots de synchronisation de l'installation DISCRET.

Selon une autre application complémentaire de la précédente, le chiffreur selon la Fig. 1 a son entrée $E_1$ reliée à la sortie du générateur pseudo-aléatoire de l'installation DISCRET. Sa sortie $S_1$ délivre la séquence pseudo-aléatoire chiffrée. A la réception, le déchiffreur selon la Fig. 2 est connecté en amont du générateur pseudo-aléatoire et délivre par sa sortie $S_2$ la séquence déchiffrée. Le mot de configuration, qui ne subit pas de chiffrement et déchiffrement, peut être utilisé comme clé C et, par suite, peut être transmis aux entrées 150, 250 des calculateurs 15, 25.

De manière générale, on notera qu'un signal numérique quelconque du genre pseudo-aléatoire, mais également un signal de bruit, peut être retransmis sans perte d'information à la sortie du déchiffreur, après avoir subi un chiffrement et un déchiffrement conformes à l'invention.

## Revendications

1. Installation de chiffrement et déchiffrement d'un signal numérique convoyant des mots $N_i$ à n bits, i désignant le rang du mot $N_i$ dans le signal, en un signal chiffré numérique composé de mots $R_i$ à n bits, comprenant, à l'émission dans un chiffreur (1), des moyens logiques (11) effectuant une opération logique g appliquée sur chaque mot $N_i$ et un mot prédéterminé $P_{i-1}$ à n bits pour produire le mot correspondant chiffré $R_i = g\ (N_i,\ P_{i-1})$ et des moyens (12, 13), qui comportent, en outre, un registre d'entrée (131) recevant les mots chiffrés $R_i$, pour produire les mots $P_{i-1}$ selon un algorithme prédéterminé à partir des mots chiffrés $R_i$, et, à la réception dans

un déchiffreur (2), des moyens logiques (21) effectuant une opération logique h, dite contraire de l'opération g, appliquée sur chaque mot chiffré $R_i$ et sur le mot prédéterminé $P_{i-1}$ pour produire le mot correspondant déchiffré $N_i = h (R_i, P_{i-1})$ et des moyens de production des mots $P_{i-1}$ (22, 23) analogues à ceux (12, 13) du chiffreur, caractérisée en ce que chacun des moyens de production des mots prédéterminés $P_{i-1}$ comprend une mémoire programmable (12; 22) ayant sa sortie reliée aux moyens logiques (11; 21) pour mémoriser $2^a$ mots $P_{i-1}$ prédéterminés rangés à des adresses respectives $A_{i-1}$ à a bits, des moyens (135; 235) reliés au registre d'entrée (131; 231) pour adresser en lecture la mémoire (12; 22) par lesdites adresses $A_{i-1}$ dont les a bits sont des bits du mot contenu dans le registre (131; 231), et un calculateur (15; 25) qui, initialisé en phase de calcul, commande la déconnexion des moyens d'adressage (13; 23) et de la mémoire (12, 22) afin de calculer selon un algorithme prédéterminé et sélectivement en fonction d'un mot de code prédéterminé (C) lesdits mots $P_i$ et afin d'écrire lesdits mots $P_i$ auxdites adresses respectives $A_i$ dans la mémoire programmable (12; 22) et qui sélectionne a sorties dudit registre d'entrée (131, 231) parmi r dans les moyens d'adressage (13; 23) en fonction dudit mot de code prédéterminé (C) afin que les moyens d'adressage transmettent à ladite mémoire (12; 22) lesdites adresses de lecture $A_i$ à a bits.

2. Installation de chiffrement et déchiffrement d'un signal numérique convoyant des mots $N_i$ à n bits en un signal chiffré numérique composé de mots $R_i$ à n bits, caractérisée en ce qu'elle comprend, à l'émission dans le chiffreur, un nombre K de chiffreurs élémentaires ($1_k$) en série tels que celui de l'installation conforme à la revendication 1, la sortie ($140_k$) à mots chiffrés des moyens logiques ($11_k$) d'un chiffreur élémentaire ($1_k$) de rang k ($1 \leq k \leq K$) étant reliée à l'entrée ($110_{k+1}$) à mots à chiffrer des moyens logiques ($11_{k+1}$) du chiffreur élémentaire ($1_{k+1}$) de rang suivant k+1, et en ce qu'elle comprend à la réception dans le dechiffreur, un nombre K de déchiffreurs élémentaires ($2_k$) en série tels que celui de l'installation conforme à la revendication 1, la sortie ($212_k$) à mots déchiffrés des moyens logiques ($21_k$) d'un déchiffreur élémentaire ($2_k$) de rang k effectuant l'opération $h_k$ contraire de l'opération $g_k$ effectuée par le chiffreur élémentaire de rang k, étant reliée à l'entrée ($200_{k-1}$) à mots à déchiffrer des moyens logiques ($21_{k-1}$) du déchiffreur élémentaire ($2_{k-1}$) de rang précédent k−1 effectuant l'opération $h_{k-1}$ contraire de l'opération $g_{k-1}$ effectuée par le chiffreur élémentaire de rang k−1.

**Patentansprüche**

1. Einrichtung zur Verschlüsselung und Entschlüsselung eines digitalen Signals, das von $N_i$ Worten zu n bits begleitet ist, wobei i den Rang des Wortes $N_i$ im Signal bezeichnet, in ein digitales Signal von $R_i$ Worten zu n bits; mit einer logischen Schaltung (11) zur Eingabe des Signals in einen Verschlüßler (1), die jedes Wort $N_i$ und ein vorgegebenes Wort $P_{i-1}$ mit n bits durch eine logische Operation g beeinflußt, um das entsprechende verschlüsselte Wort $R_i = g (N_i, P_{i-1})$ zu erhalten, und mit einer Schaltung (12, 13), die u. a. ein Eingangsregister (131) zur Aufnahme der verschlüsselten Worte $R_i$ aufweist, zur Erzeugung der Worte $P_{i-1}$ gemäß einem vorgegebenen Algorithmus aus den verschlüsselten Worten $R_i$, und mit einer logischen Schaltung (21) für den Empfang des Signals in einem Entschlüßler (2), die jedes verschlüsselte Wort $R_i$ und das vorgegebene Wort $P_{i-1}$ einer als der Operation g entgegengesetzt bezeichneten Operation h unterwirft, um das entsprechende entschlüsselte Wort $N_i = h (R_i, P_{i-1})$ zu erzeugen, und mit zu der Schaltung (12, 13) des Verschlüßlers analogen Schaltungen (22, 23) zum Erzeugen der Worte $P_{i-1}$,
dadurch gekennzeichnet, daß jede Schaltung zum Erzeugen der vorgegebenen Worte $P_{i-1}$
einen programmierbaren Speicher (12; 22), dessen Ausgang mit logischen Schaltungsteilen (11; 21) verbunden ist, zum Speichern von $2^a$ vorgegebenen Worten $P_{i-1}$, die nach entsprechenden Adressen $A_{i-1}$ zu a bits geordnet sind,
einen mit dem Eingangsregister (131; 231) verbundenen Schaltungsteil (135; 235), um den Speicher (12; 22) beim Einlesen mit den Adressen $A_{i-1}$ zu versehen, deren a bits die bits des im Eingangsregister (131; 231) gehaltenen Wortes sind,
einen Rechner (15; 25), der, in der Rechenphase ausgelöst, die Trennung des Adressierschaltungsteils (13; 23) vom Speicher (12, 22) steuert, um die Worte $P_i$ nach einem vorgegebenen Algorithmus und selektiv in Funktion eines vorgegebenen Codewortes (C) zu errechnen und diese Worte $P_i$ zu den entsprechenden Adressen $A_i$ in den programmierbaren Speicher (12; 22) einzuschreiben, und der a Ausgänge des Eingangsregisters (131, 231) in Abhängigkeit des vorgegebenen Codewortes (C) unter r in die Adressierschaltungsteile auswählt, damit die Adressierschaltungsteile die Leseadressen $A_i$ zu a bits in den Speicher (12; 22) übertragen,
aufweist.

2. Einrichtung zur Verschlüsselung und Entschlüsselung eines digitalen Signals, das von $N_i$ Worten zu n bits begleitet ist, in ein digitales Signal von $R_i$ Worten zu n bits, dadurch gekennzeichnet, daß sie zur Eingabe in den Verschlüßler eine Anzahl K von Grundverschlüßlern ($1_k$) mit dem in Anspruch 1 beschriebenen Aufbau in Reihe aufweist, daß der Ausgang ($140_k$) für die verschlüsselten Worte des logischen Schaltungsteiles ($11_k$) eines Grundverschlüßlers ($1_k$) vom Rang k ($1 \leq k \leq K$) mit dem Eingang ($110_{k+1}$) für zu verschlüsselnde Worte des logischen Schaltungsteiles ($11_{k+1}$) des Grundverschlüßlers ($1_{k+1}$) vom nachfolgenden Rang k+1 verbunden ist, und daß sie für den

Empfang im Entschlüßler eine Anzahl K von Grundentschlüßlern ($2_k$) mit einem im Anspruch 1 beschriebenen Aufbau in Reihe aufweist, wobei der Ausgang ($212_k$) für die entschlüsselten Worte der logischen Schaltung ($21_k$) eines Grundentschlüßlers ($2_k$) vom Range k, der die Operation $h_k$ durchführt, die der Operation $g_k$ entgegengesetzt ist, die vom Grundverschlüßler vom Rang k ausgeführt wird, mit dem Eingang ($200_{k-1}$) für die zu entschlüsselnden Worte der logischen Schaltung ($21_{k-1}$) des Grundentschlüßlers ($2_{k-1}$) vom vorausgehenden Rang $k-1$, der die Operation $h_{k-1}$, die der vom Grundverschlüßler vom Rang $k-1$ ausgeführten Operation $g_{k-1}$ entgegengesetzt ist, ausführt, verbunden ist.

**Claims**

1. Arrangement for enciphering and deciphering a digital signal conveying n-bit words $N_i$, i denoting the rank of the word $N_i$ in the signal, into a digital enciphered signal having n-bit words $R_i$, comprising, in an encipher (1) at the transmitting end, logic means (11) performing a logic operation g applied to each word $N_i$ and a predetermined n-bit word $P_{i-1}$ to produce the corresponding enciphered word $R_i=g(N_i, P_{i-1})$ and means (12, 13) that further comprise an input register (131) receiving the enciphered words $R_i$, for producing the words $P_{i-1}$ according to a predetermined algorithm from the enciphered words $R_i$, and, in a decipher (2) at the receiving end, logic means (21) performing a logic operation h, called contrary to operation g, applied to each enciphered word $R_i$ and to the predetermined word $P_{i-1}$ to produce the corresponding deciphered word $N_i=h(R_i, P_{i-1})$ and means (22, 23) analogous to these (12, 13) of the encipher for producing the words $P_{i-1}$, characterized in that each of the $P_{i-1}$ predetermined word producing means (12; 22) comprises a programmable memory (12; 22) having its output connected to the logic means (11; 21) for memorizing $2^a$ predetermined words $P_{i-1}$ stored at respective a-bit addresses $A_{i-1}$, means (135; 235) connected to the input register (131; 231) for read addressing the memory (12; 22) by said addresses $A_{i-1}$ whose a-bits are bits of the word contained in the register (131; 231), and a computer (15; 25) that, when triggered in computation phase, controls the disconnection of the addressing means (13; 23) and the memory (12; 22) thereby computing said words $P_i$ as per a predetermined algorithm and selectively in terms of a predetermined code word (C) and thereby writing said words $P_i$ at said respective addresses $A_i$ in the programmable memory (12; 22) and that selects a outputs of said input register (131; 231) out of r by the addressing means (13; 23) in function of said predetermined code word (C), thereby said addressing means transmit said a-bit writing addresses $A_i$ to said memory (12; 22).

2. Arrangement for enciphering and deciphering a digital signal conveying n-bit words $N_i$ into a digital enciphered signal having n-bit words $R_i$, characterized in that it comprises, in the encipher at the transmitting end, a number of K of series-connected elementary enciphers ($1_k$) such as that of the arrangement according to claim 1, the enciphered word output ($140_k$) of the logic means ($11_k$) of an elementary encipher ($1_k$) having the rank k ($1 \leq k \leq K$) being connected to the word-to-be-enciphered input ($110_{k+1}$) of the logic means ($11_{k+1}$) of the elementary encipher ($1_{k+1}$) having the following rank $k+1$, and in that it comprises, in the decipher at the receiving end, a number K of series-connected elementary deciphers ($2_k$) such as that of the arrangement according to claim 1, the deciphered word output ($212_k$) of the logic means ($21_k$) of an elementary decipher ($2_k$) having the rank k performing the operation $h_k$ contrary to the operation $g_k$ performed by the encipher having the rank k, being connected to the word-to-be-deciphered input ($200_{k-1}$) of the logic means ($21_{k-1}$) of the elementary decipher ($2_{k-1}$) having the preceding rank $k-1$ and performing the operation $h_{k-1}$ contrary to the operation $g_{k-1}$ performed by the elementary encipher having the rank $k-1$.

FIG.1

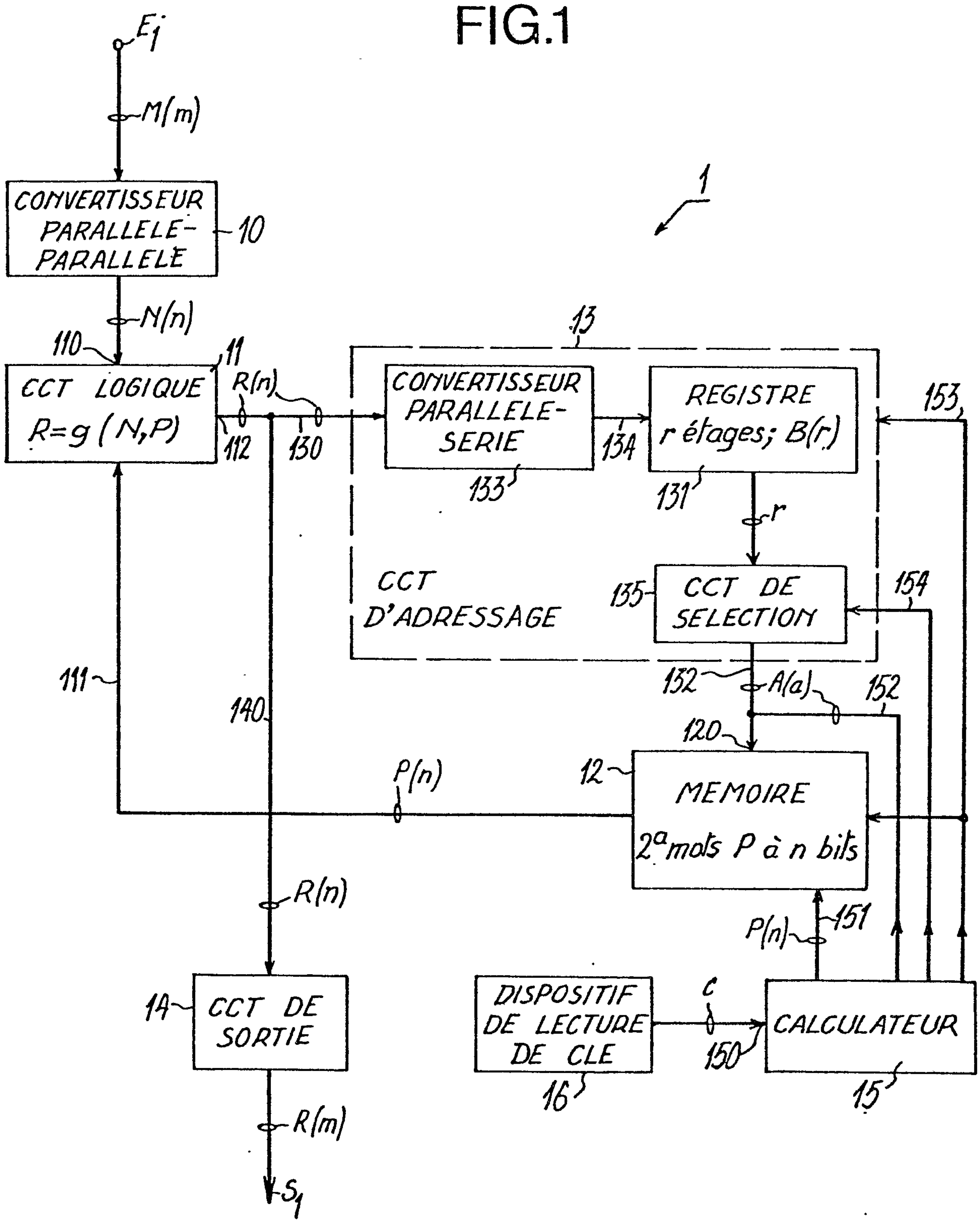

E1
M(m)
CONVERTISSEUR PARALLELE-PARALLELE
10
N(n)
110
11
CCT LOGIQUE
R=g(N,P)
112
R(n)
130
13
CONVERTISSEUR PARALLELE-SERIE
133
134
REGISTRE
r étages; B(r)
131
r
153
CCT D'ADRESSAGE
135
CCT DE SELECTION
154
111
140
132
A(a)
152
120
12
P(n)
MEMOIRE
2^a mots P à n bits
R(n)
P(n)
151
14
CCT DE SORTIE
DISPOSITIF DE LECTURE DE CLE
c
150
CALCULATEUR
16
15
R(m)
S1
1

FIG. 2

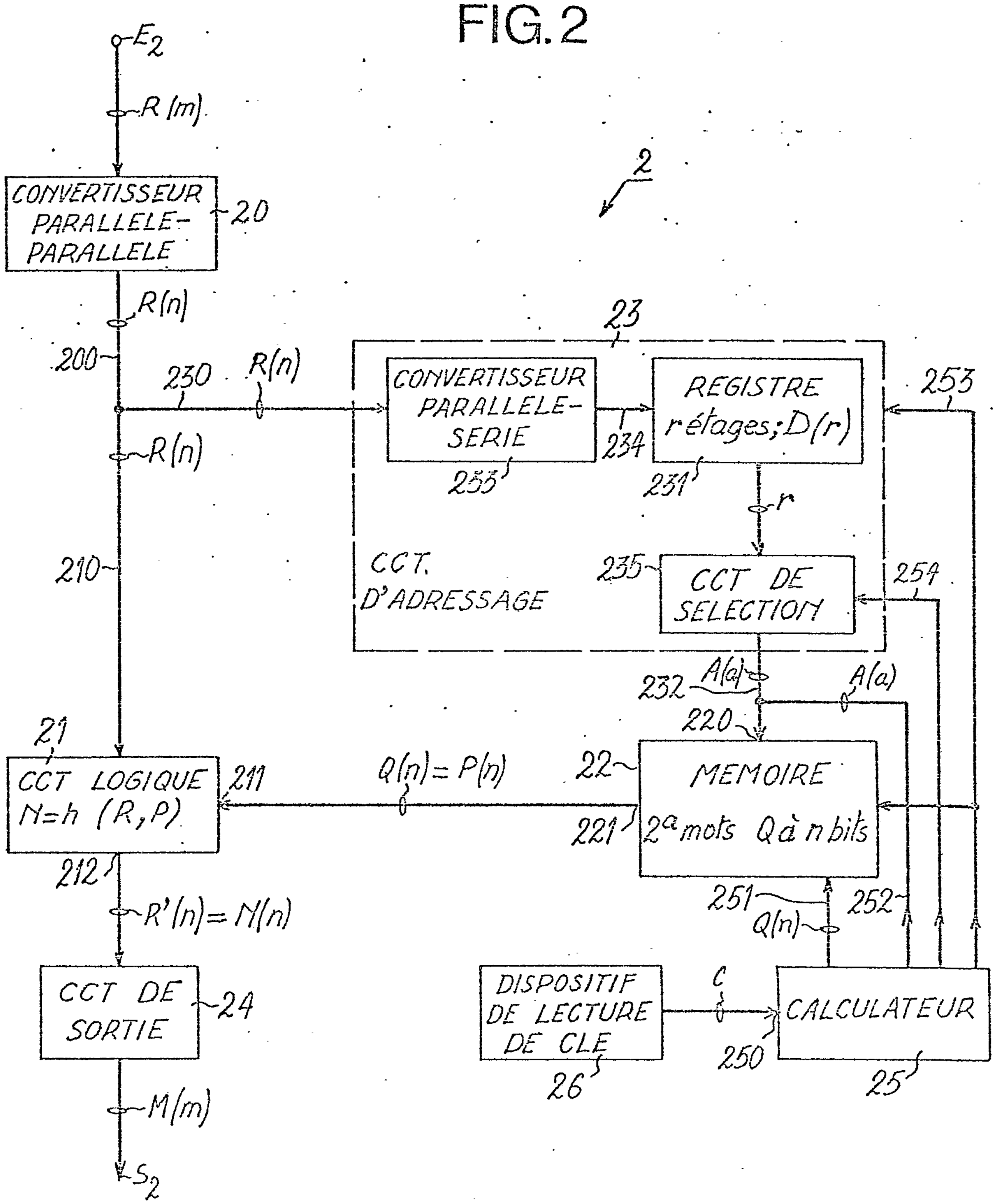
E2
R(m)
CONVERTISSEUR PARALLELE-PARALLELE
20
R(n)
200
230
R(n)
23
CONVERTISSEUR PARALLELE-SERIE
REGISTRE r étages; D(r)
253
234
233
231
R(n)
r
CCT. D'ADRESSAGE
235
CCT DE SELECTION
254
210
232
A(a)
A(a)
220
21
CCT LOGIQUE N=h (R,P)
211
Q(n)=P(n)
22
MEMOIRE
221
2^a mots Q à n bits
212
251
252
Q(n)
R'(n)=N(n)
CCT DE SORTIE
24
DISPOSITIF DE LECTURE DE CLE
C
CALCULATEUR
250
26
25
M(m)
S2
2

FIG.3A

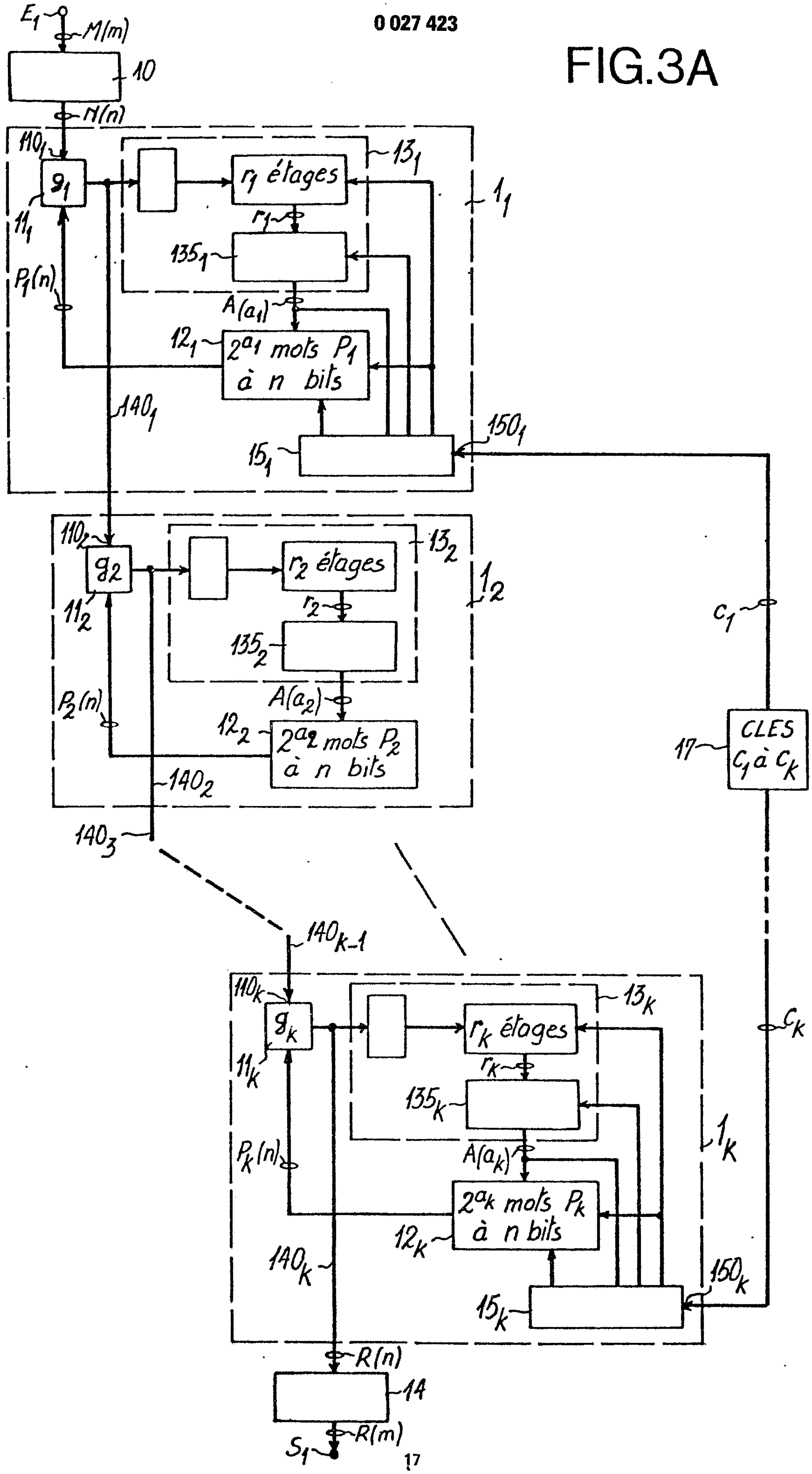
E1
M(m)
10
N(n)
1101
g1
111
r1 étages
131
11
r1
1351
P1(n)
A(a1)
121
2a1 mots P1
à n bits
1401
1501
151
1102
g2
112
r2 étages
132
12
r2
1352
P2(n)
A(a2)
122
2a2 mots P2
à n bits
1402
1403
c1
17
CLES
c1 à ck
140k-1
110k
gk
11k
rk étages
13k
1k
rk
135k
Pk(n)
A(ak)
2ak mots Pk
à n bits
12k
140k
150k
15k
ck
R(n)
14
R(m)
S1

FIG.3B

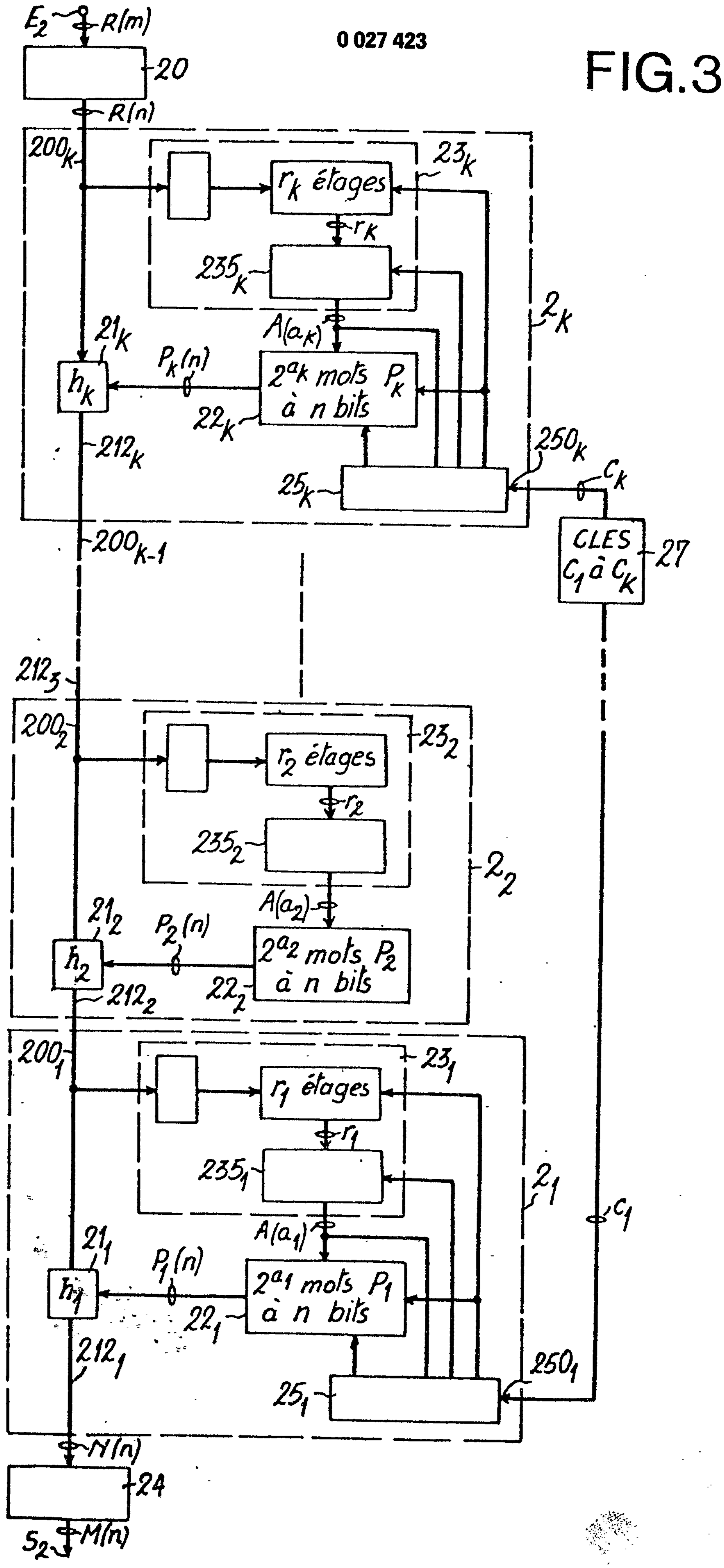

E2
R(m)
20
R(n)
200k
23k
rk étages
rk
235k
2k
A(ak)
21k
Pk(n)
hk
2ak mots Pk
à n bits
22k
212k
250k
Ck
25k
200k-1
CLES
C1 à Ck
27
2123
2002
232
r2 étages
r2
2352
22
A(a2)
212
P2(n)
h2
2a2 mots P2
à n bits
222
2122
2001
231
r1 étages
r1
2351
21
A(a1)
C1
211
P1(n)
h1
2a1 mots P1
à n bits
221
2121
2501
251
N(n)
24
S2
M(n)